# EUROPÄISCHE PATENTSCHRIFT

(11) **EP 0 736 444 B1**
(45) Veröffentlichungstag und Bekanntmachung des Hinweises auf die Patenterteilung: **10.05.2000**
(21) Anmeldenummer: 96101867.8
(22) Anmeldetag: 09.02.1996
(51) Int. Cl.: B62D 51/00, B62D 1/12, B62B 5/06, B62B 3/06, B66F 9/20

(54) **Deichsel für ein Flurförderzeug**
Drawbar for an industrial truck
Timon pour un chariot de manutention

(30) Priorität: 08.04.1995 DE 19513428
(43) Veröffentlichungstag der Anmeldung: 09.10.1996
(73) Patentinhaber: Jungheinrich Aktiengesellschaft, 22047 Hamburg (DE)
(72) Erfinder: Baginski, Ralf, Dipl.-Ing., D-21398 Neetze (DE); Kube, Matthias, Dipl.-Ing., D-22850 Norderstedt (DE)
(74) Vertreter: Patentanwälte Hauck, Graalfs, Wehnert, Döring, Siemons

(56) Entgegenhaltungen:
- DE-A- 2 751 333
- DE-A- 3 102 143
- US-A- 3 295 622

## Beschreibung

Die Erfindung bezieht sich auf eine Deichsel für ein Flurförderzeug.

Für Flurförderzeuge, die im Mitgeh- oder Mitfahrbetrieb betrieben werden, ist bekannt, eine Deichselsteuerung vorzusehen. Ein Deichselschaft ist am inneren Ende mit der Lenkwelle und am äußeren Ende mit einem Deichselkopf verbunden. Der Deichselkopf weist Betätigungsorgane auf für die Einstellung der Geschwindigkeit, die Fahrtrichtung usw.

Aus der CH-A-279 506 ist ein Förderzeug bekanntgeworden, bei dem die auf der Lenkwelle sitzende Deichsel aus zwei um eine horizontale Achse klappbaren Abschnitten besteht. Im ausgeklappten Zustand kann das Fahrzeug im Mitgehbetrieb betrieben werden. Im zusammengeklappten Zustand wird eine Betätigung von einer Plattform des Fahrzeugs aus möglich.

Eine ähnliche Ausbildung der Deichsel für ein Flurförderzeug ist in der DE-A-24 47 859 beschrieben.

Aus der DE-A-27 54 102 ist eine Deichsel für ein Flurförderzeug bekanntgeworden, die mit im wesentlichen in gleicher Höhe verbleibendem Deichselkopf ohne Überwindung eines nennenswerten Widerstands verkürzbar ist, wobei das Maß der Verkürzung praktisch der gesamten Länge der Deichsel entspricht. Um diese Aufgabe zu lösen, ist aus der Druckschrift bekannt, die Deichselabschnitte über einen Doppelanlenkungssystem, beispielsweise einem Parallelogramm, zu führen. Eine Verschwenkung des kopfnahen Bereiches der Deichsel erfolgt um eine horizontale Achse.

Aus der DE-A-27 51 333 ist bekannt, die Deichselabschnitte teleskopierbar zu machen und den ausfahrbaren Teil mit einer Feder zu beaufschlagen. Dieses Dokument ist gattungsbildend für dem Oberbegriff des Anspruchs 1.

Aus der DE-A-38 32 581 ist schließlich bekannt, den Deichselkopf um eine horizontale Achse gegenüber der Deichsel eines Flurförderzeugs zu schwenken.

Allen bekannten Deichseln ist gemeinsam, daß sie bei ihrer Betätigung um die Achse der Lenkwelle geschwenkt werden und der Deichselkopf mithin eine Kreisbahn beschreibt. Durch die starre Verbindung zwischen Deichselkopf und -schaft rotiert der Deichselkopf, während er sich auf der Kreisbahn bewegt. Ist auch ein Kippen der Deichsel vorgesehen, erfolgt dies auf einer Kugelebene um die Lenkwelle.

Ein derartiger Bewegungsablauf ist nachteilig. Bei engen Kurven und im Rangierbetrieb ist die Bewegung des Bedieners zur Deichsel gegenläufig. Sie erfordert eine Verdrehung des Bedieners, die zum einen eine körperliche Beeinträchtigung verursachen kann und zum anderen die Sicherheit beeinflußt, insbesondere bei engen und schnellen Kurvenfahrten. Der Bediener muß sich entgegen der Kurvenrichtung nach außen zur Deichsel lehnen und hat Schwierigkeiten, sich gegenüber den Fliehkräften festzuhalten.

Der Erfindung liegt die Aufgabe zugrunde, eine Deichsel für Flurförderzeuge zu schaffen, welche eine angenehme und sichere Bedienung der Deichsel ermöglicht.

Diese Aufgabe wird durch die Merkmale des Patentanspruchs 1 gelöst.

Bei der erfindungsgemäßen Deichsel ist zwischen dem Deichselkopf und dem Deichselschaft mindestens ein Gelenk vorgesehen mit einer im wesentlichen vertikalen Drehachse. Zwischen dem Deichselkopf und dem Rahmen ist ein Getriebe angeordnet derart, daß der Deichselkopf bei einer Verstellung der Deichsel aus der Mittellage eine ergonomische Orientierung erhält.

Je nach Ausbildung des Getriebes wird bei einer Verschwenkung des Deichselschaftes die Orientierung des Deichselkopfes annähernd beibehalten oder in jedem Falle so gewählt, daß sich der Bediener auch bei engen Kurvenfahrten nur in vernachlässigbarem Maß zu verdrehen braucht. Seine Standfestigkeit ist auch bei schnellen Kurvenfahrten nicht beeinträchtigt. Schließlich wird eine subjektive Kraftverringerung für den Bediener erreicht. Bei einer Beibehaltung der Orientierung des Deichselkopfes wird der Deichselkopf fast ausschließlich parallel zum Schultergürtel verschoben. Erst bei größeren Lenkwinkeln trägt eine Drückbewegung vom Körper weg auch zum Auslenken bei.

In einer Ausgestaltung der Erfindung ist das Getriebe so ausgebildet, daß der Deichselkopf bei Verschwenkung des Deichselschaftes sich zum Fahrer hin orientiert. Bei dieser Ausführungsform ist die Orientierung des Deichselkopfes bei Deichselverschwenkung noch günstiger.

Es gibt verschiedene Möglichkeiten, das erfindungsgemäße Getriebe zu realisieren. Für die Kopplung der Deichselkopfbewegung können Seiltriebe, Zahnradtriebe, Zahnriemen, Keilriemen oder dergleichen eingesetzt werden. Eine andere Ausgestaltung der Erfindung sieht vor, daß der Deichselkopf fest mit dem Verbindungsglied eines Koppelgetriebes verbunden ist. Bei dieser Ausführungsform ist das Verbindungsglied gleichzeitig ein Gelenkteil des Gelenks zwischen Deichselschaft und Deichselkopf. Die Schwingen des Koppelgetriebes können annähernd gleich lang sein und sind vorzugsweise parallel, so daß ein Parallelogramm gebildet ist, bei dem der Gelenkpunkt zwischen Deichselkopf und Verbindungsglied einen Kreisbogen beschreibt, wenn die Deichsel verschwenkt wird. Die Orientierung des Deichselkopfes bleibt indessen erhalten. Wird hingegen der Abstand zwischen den Anlenkpunkten der Schwinge am Rahmen verändert, beispielsweise größer gemacht, erhält man eine Überkompensation. Bei einer Verschwenkung des Deichselschaftes wird der Deichselkopf zum Fahrer hin orientiert. Durch eine Verstellung der Anlenkpunkte am Rahmen, beispielsweise durch Verstellung in einem Langloch, läßt sich das Maß der Kompensation des Lenkwinkels einstellen. Die Verstellung ist vorzugsweise symmetrisch, um ein symmetrisches Lenkverhalten zu erhalten.

Die Verschwenkung der erfindungsgemäßen Deichsel kann in einer horizontalen Ebene erfolgen. Sie kann jedoch auch wie im bekannten Fall auf einer Kugelfläche stattfinden, wenn die Gelenke des Getriebes entsprechend ausgeführt sind.

Ausführungsbeispiele der Erfindung werden nachfolgend anhand von Zeichnungen näher erläutert.
- Fig. 1: zeigt verschiedene Positionen einer Deichsel für ein Flurförderzeug nach dem Stand der Technik.
- Fig. 2: zeigt verschiedene Positionen einer Deichsel nach der Erfindung.
- Fig. 3: zeigt verschiedene Positionen einer weiteren Ausführungsform einer Deichsel nach der Erfindung.

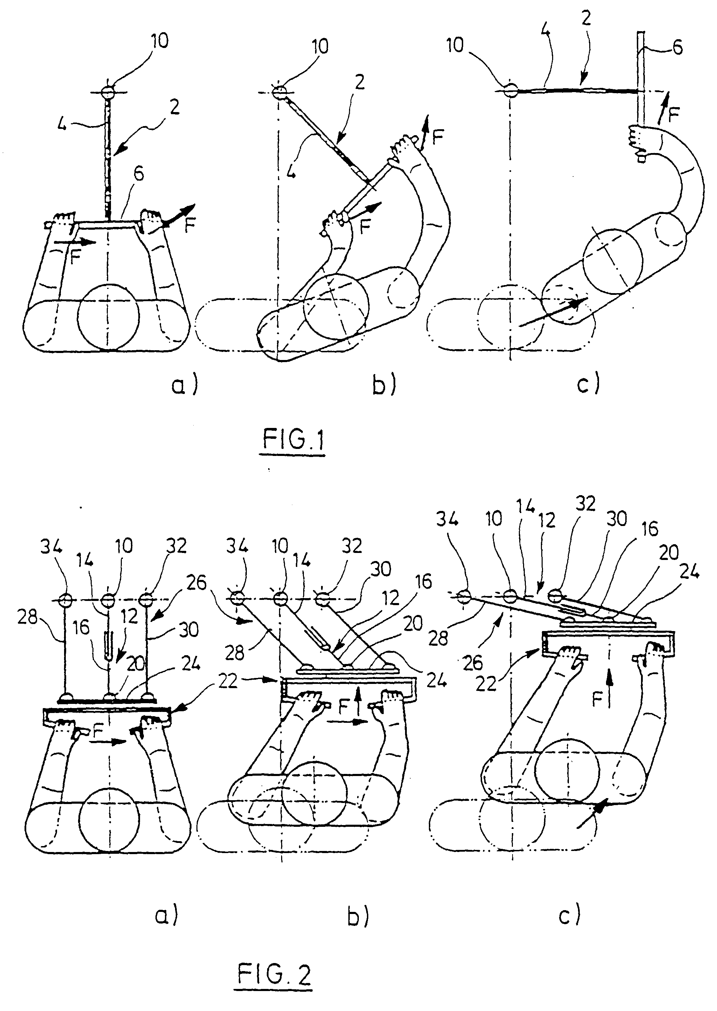

In Fig. 1 weist ein nicht gezeigtes Förderfahrzeug, beispielsweise ein Kommissionierer, eine Lenkwelle 10 auf, die sich zum Beispiel durch den Antriebsteil des Fahrzeugs zum gelenkten Rad erstreckt und über das Antriebsteil nach oben ragt. Mit der Lenkwelle ist eine Deichsel 2 verbunden, die einen Deichselschaft 4 sowie einen starr damit verbundenen Deichselkopf 6 aufweist. Aus den Darstellungen a bis c in Fig. 1 ist zu erkennen, wie sich der Fahrer bewegen muß, um Lenkausschläge zu erreichen. Bei größeren Lenkwinkeln kann er selbst durch Mitbewegen des Oberkörpers in Richtung Deichselkopf 6 mit den Armen nicht mehr folgen. Er schiebt die Deichsel durch einen vorangehenden Umgreifprozeß mit der rechten Hand über den linken Deichselgriff in die Endlage (Fig. 1c). Dabei ist zu beobachten, daß der Fahrer bei großen Lenkausschlägen den Höhenwinkel (nicht zu erkennen) stetig verringert und die Deichsel somit auf geringerer Höhe bedient. Der Aktionsbereich des Vor-und Hinauslehnens des Oberkörpers ist durch die damit verbundene Lagerung des Schwerpunkts des menschlichen Körpers und die zusätzlich durch die Dynamik der Kurvenfahrt entstehende Fliehkraft zur sicheren Standaufrechterhaltung begrenzt. Das Verdrehen des Handgelenks, das Gestrecktsein und die Neigung zum Umgreifen der Arme liegt daran, daß der Lenker zunächst parallel zum Schultergürtel und bei größerem Lenkausschlag sich immer mehr in die dazu senkrechte Position bewegt (Fig. 1c).

Bei der Ausführungsform nach Fig. 2 werden Teile, die mit denen nach Fig. 1 gleich sind, mit gleichen Bezugszeichen versehen.

Bei der Ausführungsform nach Fig. 2 besteht der Deichselschaft aus zwei Abschnitten 14, 16, die teleskopisch verschiebbar ineinander gelagert sind. Der Abschnitt 14 ist mit der Lenkwelle 10 verbunden, während der Abschnitt 16 über ein Gelenk 20 an einem Deichselkopf 22 angelenkt ist. Der Deichselkopf 22 dient zur Betätigung der Deichsel 12 und enthält außerdem Betätigungsorgane zum Betrieb des nicht gezeigten Fahrzeugs, beispielsweise Fahrtrichtungsschalter, Geschwindigkeitsgeber, Notschalter usw. Auf den Aufbau des Deichselkopfes wird im einzelnen nicht eingegangen, da er allgemein bekannt und nicht Gegenstand der Erfindung ist.

Bestandteil des Deichselkopfes 22 ist ein Verbindungsglied 24 eines Koppelgetriebes 26. An den Enden des Verbindungsgliedes 24 sind Schwingen 28, 30 des Koppelgetriebes 26 angelenkt, die ihrerseits bei 32 bzw. 34 fahrzeugfest angelenkt sind. Die Schwingen 28, 30 sind gleich lang und verlaufen parallel, d.h. die Abstände ihrer Anlenkpunkte am Verbindungsglied 24 bzw. am Fahrzeug sind gleich.

In Geradeausstellung, d.h. bei einem Lenkwinkel von 0°, gleicht die Stellung des Deichselkopfes 22 der des Deichselkopfes 6 nach Fig. 1. Bei einer Auslenkung mit kleinerem Winkel wird der Deichselkopf 22 fast ausschließlich parallel zum Schultergürtel des Fahrers verschoben (Pfeilrichtung). Erst bei größeren Lenkwinkeln trägt eine Drückbewegung vom Körper weg auch zum Auslenken bei. Unabhängig vom Lenkwinkel hat der Deichselkopf 22 stets die gleiche Orientierung im Raum. Auf diese Weise wird für die Lenkverstellung ein subjektiv geringerer Kraftaufwand erforderlich. Bei kleinerem Lenkwinkel wird auch eine kürzere Reichweite zum Deichselkopf erhalten. In jedem Fall wird eine ergonomisch günstige Handhabung der Deichsel erreicht. Ein Umgreifen während der Lenkbewegung, auch bei größeren Lenkwinkeln, ist nicht erforderlich.

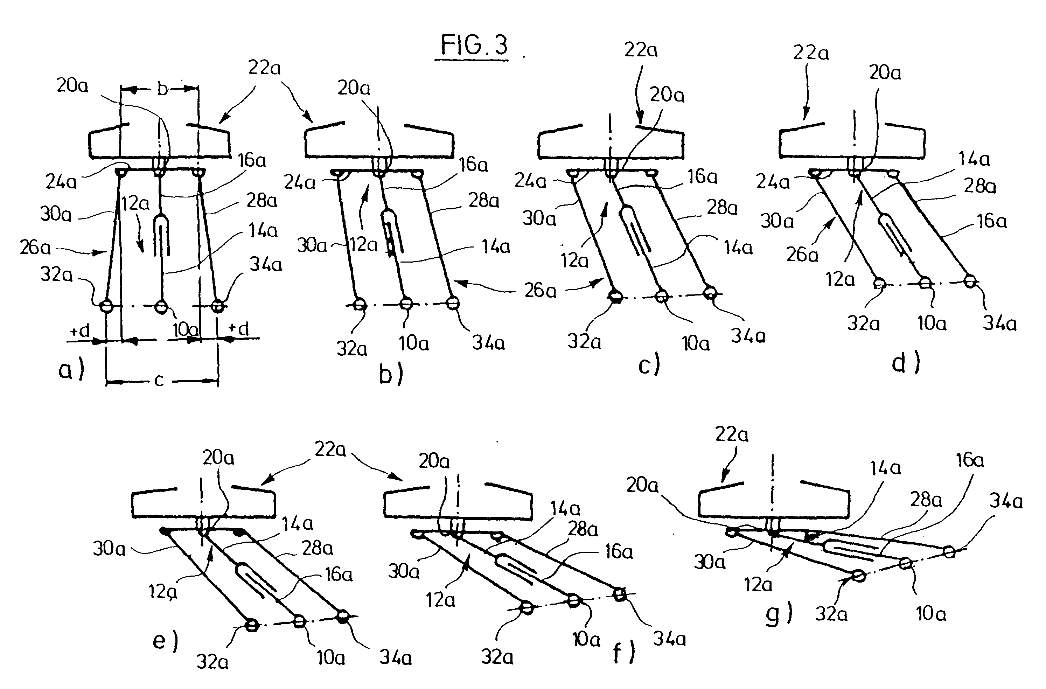

Bei der Ausführungsform nach Fig. 3 sind Teile, die mit denen nach Fig. 2 gleich sind, mit gleichen Bezugszeichen versehen, denen ein Index a hinzugefügt ist.

Die Ausführungsform nach Fig. 3 unterscheidet sich von Fig. 2 lediglich dadurch, daß der Abstand der Anlenkpunkte der Schwingen 28a, 30a am Verbindungsglied 24a, der mit b bezeichnet ist, kleiner ist als der Abstand der Anlenkpunkte 32a, 34a, der mit c bezeichnet ist. Die jeweilige Differenz beträgt d, wobei d durch eine entsprechende Ausbildung der Anlenkpunkte 32a, 34a verstellbar gemacht werden kann. Dadurch wird erreicht, daß eine Drehbewegung der Deichsel dazu führt, daß der Deichselkopf 22a zum Bediener hin ausgerichtet ist.

Es ist denkbar, daß auch weitere Gelenke zwischen Schaft und Deichselkopf angeordnet werden können mit entsprechenden Kopplungsmöglichkeiten, um eine ergonomisch günstige Orientierung des Deichselkopfes bei Deichselauslenkung zu erhalten. Der Gelenkpunkt 20 bei den Ausführungsformen nach den Fign. 2 und 3, der sich auf einer Kreisbahn bewegt, würde in diesem Fall nicht mehr auf einer Kreisbahn liegen.

## Patentansprüche

1. Deichsel für ein Flurförderzeug mit einem Deichselschaft, der an einem Ende mit einer im Rahmen des Förderzeugs gelagerten vertikalen Lenkwelle und am anderen Ende mit einem Deichselkopf verbunden ist, an dem Betätigungsorgane für den Betrieb des Förderzeugs angeordnet sind, dadurch gekennzeichnet, daß zwischen dem Deichselkopf (22, 22a) und dem Deichselschaft (12, 12a) mindestens ein Gelenk (20, 20a) mit im wesentlichen vertikaler Drehachse vorgesehen ist und zwischen Deichselkopf (22, 22a) und Rahmen ein Getriebe (26, 26a) angeordnet ist derart, daß der Deichselkopf (22, 22a) bei einer Verstellung der Deichsel (12, 12a) aus der Mittellage eine ergonomische Orientierung erhält.

2. Deichsel nach Anspruch 1, dadurch gekennzeichnet, daß das Getriebe so ausgebildet ist, daß der Deichselkopf (22) bei Verschwenkung der Deichsel (12) seine Orientierung beibehält.

3. Deichsel nach Anspruch 1, dadurch gekennzeichnet, daß das Getriebe so ausgebildet ist, daß der Deichselkopf (22a) bei Verschwenkung des Deichselschaftes (12a) sich zum Fahrer hin orientiert.

4. Deichsel nach einem der Ansprüche 1 bis 3, dadurch gekennzeichnet, daß als Getriebe ein Seiltrieb, ein Zahnradgetriebe, ein Zahnriemengetriebe, ein Keilriemengetriebe usw. vorgesehen ist.

5. Deichsel nach Anspruch 1, dadurch gekennzeichnet, daß der Deichselkopf (22, 22a) fest mit dem Verbindungsglied (24, 24a) eines Koppelgetriebes (26, 26a) verbunden ist.

6. Deichsel nach Anspruch 5, dadurch gekennzeichnet, daß die Schwingen (28, 30, 28a, 30a) des Koppelgetriebe (26, 26a) annähernd gleich lang sind.

7. Deichsel nach Anspruch 5 oder 6, dadurch gekennzeichnet, daß die Schwingen (28, 30) parallel angeordnet sind.

8. Deichsel nach Anspruch 5 oder 6, dadurch gekennzeichnet, daß der Abstand (c) der Anlenkung der Schwingen (28a, 30a) am Rahmen größer ist als der Abstand (b) der Anlenkpunkte am Verbindungsglied (24a).

9. Deichsel nach Anspruch 8, dadurch gekennzeichnet, daß die Anlenkpunkte (32a, 34a) der Schwingen (30a, 28a) am Rahmen verstellbar sind.

## Claims

1. A drawbar for an industrial truck having a drawbar shank which is connected to a vertical steering shaft supported in the framing of the industrial truck at one end and to a drawbar head at the other, at which actuators are disposed for the operation of the industrial truck, characterized in that at least one joint (20, 20a) having a substantially vertical axis of rotation is provided between the drawbar head (22, 22a) and the drawbar shank (12, 12a) and a transmission (26, 26a) is disposed between the drawbar head (22, 22a) and the framing in a way that the drawbar head (22, 22a) is given an ergonomic orientation when the drawbar (12, 12a) is shifted from the middle position.

2. The drawbar according to claim 1, characterized in that the transmission is configured in such a way that the drawbar head (22) maintains its orientation when the drawbar (12) is being swung.

3. The drawbar according to claim 1, characterized in that the gearing is configured in such a way that the drawbar head (22) orients itself towards the driver maintains its orientation when the drawbar shank (12a) is swung.

4. The drawbar according to any of claims 1 to 3, characterized in that a rope drive, a toothed-gear drive, a toothed-belt drive, a V-belt drive etc. is provided as a transmission.

5. The drawbar according to claim 1, characterized in that the drawbar head (22, 22a) is firmly connected to the connecting member (24, 24a) of a coupler mechanism (26, 26a).

6. The drawbar according to claim 5, characterized in that the oscillating links (28, 30, 28a, 30a) of the coupler mechanism (26, 26a) are approximately equal in length.

7. The drawbar according to claim 5 or 6, characterized in that the oscillating links (28, 30) are disposed in parallel.

8. The drawbar according to claim 5 or 6, characterized in that the distance (c) of the hinge points of oscillating links (28a, 30a) on the framing is larger than the distance (b) of the hinge points on the connecting member (24a).

9. The drawbar according to claim 8, characterized in that the hinged points of oscillating links (32a, 34a) on the framing are shiftable.

## Revendications

1. Timon pour un chariot de manutention pourvu d'une tige de timon qui est reliée, à une extrémité, à un arbre de direction vertical placé dans le cadre du chariot de manutention et, à l'autre extrémité, à une tête de timon sur laquelle sont placés des organes de commande pour le fonctionnement du chariot de manutention,
caractérisé en ce que
entre la tête (22, 22a) de timon et la tige de timon (12, 12a), il est prévu au moins une articulation (20, 20a) pourvue d'un axe de rotation essentiellement vertical et que, entre la tête (22, 22a) de timon et le cadre, un dispositif de transmission (26, 26a) est placé de manière que la tête (22, 22a) de timon conserve une orientation ergonomique lors d'un déplacement du timon (12, 12a) à partir de la position moyenne.

2. Timon selon la revendication 1, caractérisé en ce que le jeu d'engrenages est conçu de telle manière que la tête (22) de timon conserve son orientation lors d'un déplacement du timon (12).

3. Timon selon la revendication 1, caractérisé en ce que le dispositif de transmission est conçu de telle manière que la tête (22a) de timon s'oriente vers le conducteur lors d'un déplacement de la tige (12a) de timon.

4. Timon selon l'une des revendications 1 à 3, caractérisé en ce que, comme dispositif de transmission, il est prévu une transmission par câble, une transmission par engrenages, une transmission par courroie trapézoïdale, etc.

5. Timon selon la revendication 1, caractérisé en ce que, la tête (22, 22a) de timon est reliée fermement à l'élément de liaison (24, 24a) d'un mécanisme à bielles (26, 26a).

6. Timon selon la revendication 5, caractérisé en ce que les bielles (28, 30, 28a, 30a) du mécanisme à bielles (26, 26a) sont de longueurs à peu près égales.

7. Timon selon la revendication 5 ou 6, caractérisé en ce que les bielles (28, 30) sont disposées parallèlement.

8. Timon selon la revendication 5 ou 6, caractérisé en ce que la distance (c) de l'articulation des bielles (28a, 30a) sur le cadre es plus grande que la distance (b) des points d'articulation sur l'élément de liaison (24a).

9. Timon selon la revendication 8, caractérisé en ce que les points d'articulation (32a, 34a) des bielles (30a, 28a) sont réglables sur le cadre.
